# EUROPEAN PATENT APPLICATION

(11) **EP 1 184 592 A1**
(43) Date of publication of application: **06.03.2002**
(21) Application number: 01203211.6
(22) Date of filing: 28.08.2001
(51) Int. Cl.: F16G 11/10

(54) **Cord securing device**

(30) Priority: 31.08.2000 SE 0003103
(71) Applicant: Lobler, Mikael, 457 93 Tanumshede (SE)
(72) Inventor: Lobler, Mikael, 457 93 Tanumshede (SE)
(74) Representative: Hynell, Magnus

(57) **Abstract**

The invention relates to a cord securing device, comprising at least one housing (1) and at least one sliding device (2), said sliding device (2) being slidingly arranged within said housing (1), at least one wall part (1A) of said housing (1) having a first through hole (6B), said sliding device (2) having a second through hole (6C), said first and second through holes (6B, 6C) forming a passage (6) for a cord (4), said first and second through holes (6B, 6C) providing a first and a second securing edge (9, 14) which interact for securing said cord (4) within said cord securing device. The device is characterized in that one of said through holes is arranged so as to provide a freely interacting a lever arm (L0) of substantial length (L1), in order to produce an adaptive interaction for securing of said cord (4) which is related to the force (S1) that is applied to a first outer part (4A) of said cord (4).

## Description

### TECHNICAL FIELD

This invention relates to a cord securing device comprising at least one housing and at least one sliding device, said sliding device being slidingly arranged within said housing, at least one wall part of said housing, said sliding device having a through hole, said wall part and said through hole forming a passage for a cord, said wall part and said through hole providing a first and a second securing edge which interact for securing said cord within said cord securing device.

### BACKGROUND OF THE INVENTION, PRIOR ART

There are many different situations where it is necessary to secure a cord. The most known principle for securing a cord is to use some kind of knot. However, knots may be time consuming and do require a certain skill.

There are known many different cord securing devices having the object of trying to solve the above-mentioned problem. From GB 2066891, for example, there is known a cord securing device, which corresponds to what is defined above under technical field. However, this known device uses a resilient member to provide for the securing interaction between the edges. This is a commonly known principle for easy and quick securing of a cord, as is evident from, e.g. US 4,839,946, US 4,811,466, US 4,817,250, US 4,724,584, US 4,453,292, and DE 1947966. All of these prior art devices have in common that they present a cord securing device comprising at least one housing, at least one sliding device movable within said housing and a resilient device for urging the movable member in one direction. By means of a protruding part of the sliding device a person can push the sliding device in a direction counter-acting the resilient force and thereby eliminate the interaction between the edges to release the cord, as is well known in the art. However, there are some disadvantages with the use of this principle. Firstly the use of a resilient member is a possible cause for failure, since it may brake apart and/or deliver an insufficient force. Secondly, it does add extra cost. Hence, there are reasons for trying to find a cord securing device, which may operate without the use of a resilient device.

A further disadvantage of this kind of a cord securing device is that the cord securing interaction between the edges is merely dependent on the resilient force. Accordingly, the securing force within the securing device is substantially the same independent of the need/situation. In other words, such a cord securing device cannot adapt the securing force to a higher level even if it would be necessary for securing the cord, and therefore such a cord securing device fails if the force that is applied along the cord exceeds a certain limit.

From EP 007084, which also corresponds to what is defined above under technical field except for not showing a housing, there is known a cord securing device that also uses a resilient member, but which in fact provides a securing force which is dependant on the need, i.e. the higher the force applied in the rope the higher the securing force within the cord securing device. The resilient device is merely used for a correct positioning of each of the two sliding devices, i.e. to be positioned in correct position for interaction with the rope. However, this cord securing device is not only complex and therefore expensive but does not provide for an easy manner of pulling/adjusting the cord in both directions through the cord securing device. To move the cord in the securing direction, it needs first to be moved away from the securing position within said securing device. Accordingly it is not only complex but also complicated to handle.

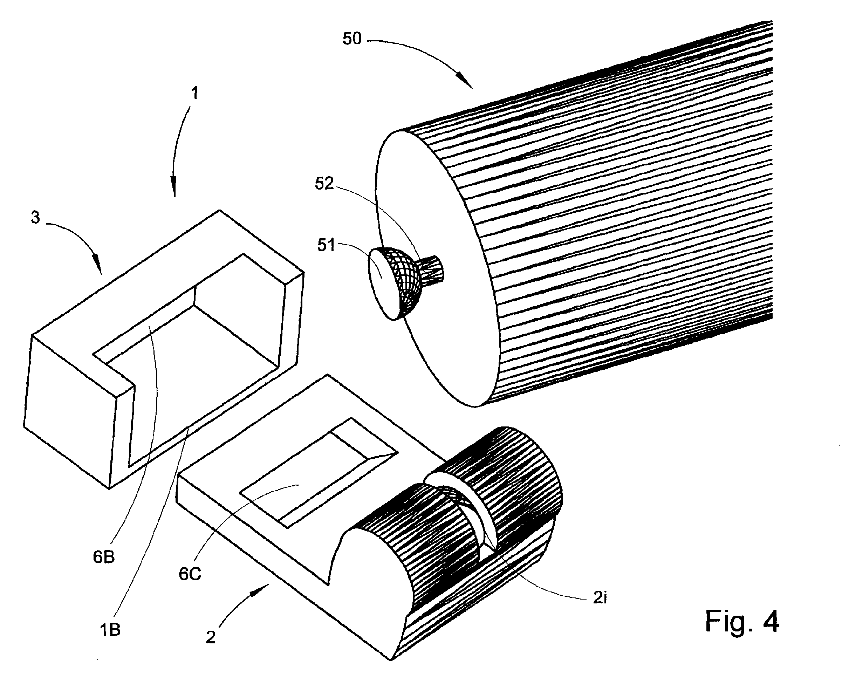

From SE 7406824 there is known a cord securing device, which also corresponds to what is defined above under technical field and which functions without the need of any resilient member. This device also provides a securing force, which is dependent on the need, i.e. the higher the force applied in the rope the higher the securing force within the cord securing device. The cord securing force is produced by a force applied to the cord, which urges the sliding device to move within the housing to produce the securing force. This cord securing device has not been any success, since it presents several disadvantages. In its preferred embodiment, where the cord escapes through the sliding device, it presents a lever arm that is insufficient for being able to easily produce the desired securing function. According to a modification thereof (shown in fig. 4 of the published document) it provides a lever arm of substantial length, but the cord may not freely interact with the lever arm because of friction against the housing, which leads to unreliable function thereof and also undesired wear of the cord.

Accordingly, there are many different kind of known cord securing devices, which present at least one of the following disadvantages. Either they provide insufficient securing force, and/or comprise failure prone parts (e.g. a resilient device), and/or are complicated to produce and/or are complicated to handle, and/or are made from numerous parts which adds costs.

### BRIEF DESCRIPTION OF THE INVENTION

It is an object of the invention to eliminate or at least minimise the problems defined above, which according to the invention is achieved by a cord securing device as defined above, wherein said housing is arranged so as to provide a freely interacting a lever arm (L0) of substantial length (L1), in order to produce an adaptive interaction for securing of said cord (4) which is related to the force (S1) that is applied to a first outer part (4A) of said cord (4).

Thanks to the arrangement according to the invention the cord securing device can be formed by a minimum number of details. In its basic form it merely consists of a housing and one sliding device, without the need of any resilient member. The use of a resilient member is not excluded however. The lever arm is arranged within the cord securing device in a manner to provide for free interaction between it and the cord, such that the securing force can be reliably applied. In combination with the use of a lever arm of substantial length this leads to a cord securing device which is easily and securely activated, and which in an adaptive manner provides for the needed securing force/interaction. Thanks to its simple structure it is also inexpensive to manufacture.

According to a further aspect of the invention said lever arm L0 of said first through hole (6B) is positioned within said housing, wherein preferably the depth L1 of said through hole (6B) is greater than the depth L2 of said second through hole (6C), and more preferred L1 is 1.2 - 50 times greater than L2, and even more preferred L1 is at least 2 times greater than L2. By means of arranging the lever arm in the housing it is easily provided for a free interaction between the cord and the lever arm, since there are no possible obstructing part of the securing device arranged on the outside of the housing.

According to another aspect of the invention a centre line C1 of the through hole (6B), providing said lever arm L0, extends in a transverse direction in relation to a plane P1 which contains a sliding surface (1C) of the housing (1), which interacts with a sliding surface (2C) of said securing part (2A), and the normal N1 of said plane P1 and said centre line C1 forms an angle α which is 0 - 80°, preferably 10 - 60°, more preferred 20 - 50°. According to the preferred embodiment a through hole providing the lever arm is arranged at a certain angle α, which leads to the formation of a sharp angle at one of the securing edges, which further facilitates a securing interaction with the flexible rope.

According to other aspects of the invention:
- said securing part (2A) is slidably arranged within said housing (1) in such a manner that it may substantially, merely be moved into two opposite directions, i.e. one releasing direction R and one securing direction S, and that said directions are substantially parallel with a plane containing said normal N1 and said centre line C1, and
- said sliding device (2) comprises a force applying part (2B) which extends outside of said housing (1) and which is directly or indirectly (2D) interconnected with a gripable portion (20), and
- said force applying part (2B) is positioned substantially within the same plane as said normal N1 and said centreline C1 and on that side in relation to the first through hole (6B) which is on the side directed to the securing direction S, and

Further advantages of the invention will be described in more detail below.

### BRIEF DESCRIPTION OF THE DRAWINGS

In the following the invention will be described with reference to the attached drawings, in which:
- Fig. 1: shows a first embodiment of a cord securing device according to the invention,
- Fig. 2: is a cross sectional view showing the principles of embodiment of Fig. 1, in an inactivated position,
- Fig. 3: shows the same as Fig. 2 but in an activated position,
- Fig. 4: shows a further embodiment of a device according to the invention in a disassembled mode,
- Fig. 5: shows the same as in Fig. 4, but in a assembled mode,
- Fig. 6: shows a cross sectional view embodiment according to Fig. 5,
- Fig. 7: shows a second embodiment in a cross sectional view according to the invention,
- Fig. 8: shows the device according to Fig. 7 in a disassembled mode,
- Fig. 9: shows a third embodiment according to the invention,
- Fig. 10: shows the device according to Fig. 9 in a cross sectional view,
- Fig. 11: shows a fourth embodiment according to the invention.
- Fig. 12: shows the device according to Fig. 11 in a cross sectional view,
- Fig. 13: shows a fifth embodiment according to the invention,
- Fig. 14: shows the same as in Fig. 13 but in a disassembled mode,
- Fig. 15: shows the device according to Fig. 13 in a cross sectional view,
- Fig. 16: shows a sixth embodiment according to the invention,
- Fig. 17: shows a seventh embodiment according to the invention,
- Fig. 18: shows the same as in Fig. 17 but in a disassembled mode

### DETAILED DESCRIPTION

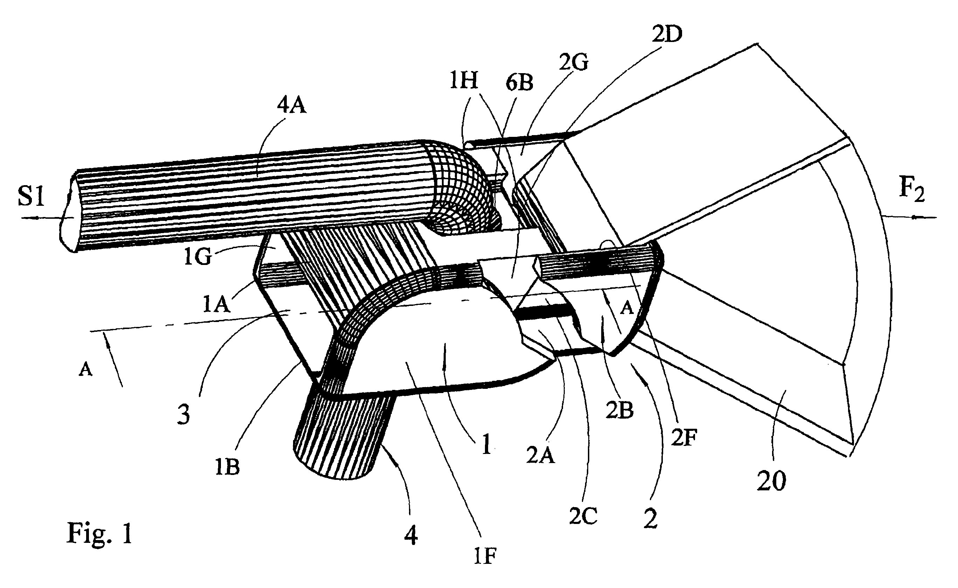

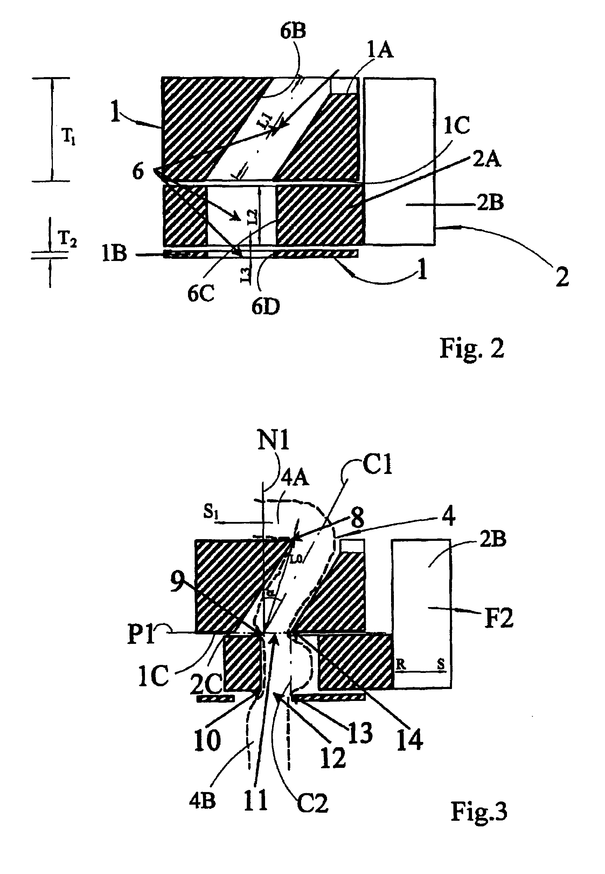

In Fig. 1 there is shown a preferred embodiment of the invention for use together with a training device, wherein a resilient cord (preferably a tubular rubber cord) is used. The cord securing device comprises a housing 1 within which a sliding device 2 is slidingly arranged. The housing forms a rectangular passage 3 extending in a length-wise direction. The sliding device 2 is arranged with an inner part 2A which has a form adapted to said passage 3, in order to facilitate sliding of said sliding device 2 within said housing 1. The housing has an upper wall-part 1A and a lower wall-part 1B. It also has two sidewalls 1F, 1G. The inner surfaces of the sidewalls 1F, 1G and the upper and the lower-walls 1A, 1B together form said passage 3. The thickness T1 (see Fig. 2) of the upper-wall 1A is substantially greater than the thickness T2 of the lower-wall 1B, preferably T1 is about 5 times greater than T2. A first through hole 6B is arranged through the upper-wall 1A. A second through hole 6C is arranged in the inner-part 2A of the sliding device 2, and a third through hole 6D is arranged in the lower-wall 1B of the housing 1. Together the three through holes 6B, 6C, 6D form a passage 6 through which the cord 4 may be inserted. The outer-part 2B of the sliding device 2 protrudes outside of the housing 1 and is arranged with a slit 2D for the arrangement of a gripable portion 20. Furthermore, the sliding device 2 is arranged with side-walls 2F, 2G having inwardly directed surfaces which interact with corresponding surfaces 1H of the housing to eliminate that the ribbon of the gripable portion 20 slides out side-ways, i.e. to retain it in a proper position.

Fig. 2 and Fig. 3 are schematic cross-sectional views indicated as A-A in Fig. 1. It can be seen that the inner-part 2A of the sliding device 2 fits snugly into the housing 1, which provides for a stable sliding movement. The different parts 1, 2 are preferably made by some material which provides for low friction between their interacting sliding surfaces, e.g. 1C, 2C (see Fig. 3). Any plastic materials, such as polypropylene, PTFE, polyethylene, etc. would be suitable, since they also provide for the possibility of inexpensive production. (Also other materials, e.g. metals such as steel, brass, aluminium would also be suitable.) Fig. 3 shows that the first through hole 6B is arranged at an angle α in relation to a normal N1 to the plane P1 which contains the upper sliding surface 1C of the housing and its interacting upper sliding surface 2C of the sliding device 2. This angle α is preferably about 20 - 40°. This leads to the creation of the sharp corner 14 at the bottom edge of the first through hole 6B. Furthermore, it provides for a substantial depth, L1 being achieved by means of said through hole. Both of these features provide for advantages as will be described below. Furthermore, it is shown that the depth L2 of the second through hole 6C is substantially smaller than the depth L1 of the first through hole. (L1 is about two times greater than L2.) The third through hole 6D has a depth that is very small. As with the second through hole 6C the depth L3 of the third through hole 6D is the same as the thickness T2 of its surrounding portion, i.e. L3 = T2 which is the thickness of the bottom wall 1B. However, the depth L1 of the first through hole 6B is substantially greater than the thickness T1 of its surrounding portion, since it is positioned at an angle α (L1 = T1 x sinus α). This feature provides for the creation of a lever arm L0 of substantial length, which assists in easy activation of the cord securing device.

A first securing edge 9 is provided at the left-hand side of the top edge of the second through hole 6C. A second securing edge 14 is arranged at the right hand side of the lower, sharp corner of the first through hole 6B. A third securing edge 10 is arranged at the lower left-hand side of the second through hole 6C. A fourth securing edge 13 is provided at the right hand side of the third through hole 6D. The edges interact pair-wise, i.e. 9 and 14 secure the cord 4 at a first position 11 whereas 10 and 13 secure the cord 4 at a second position 12.

The function of the securing device is as follows. In a deactivated mode (see Fig. 2) the passage 6 through the housing and the sliding device 2 is unobstructed and accordingly a cord 4 may easily be passed into and through the passage 6. As exemplified in Fig. 1 the cord securing device is used together with a training device, wherein the cord 4A consists of a kind of rubber tube as is known per se for training devices. Depending of the kind of exercise and the size of the person who wants to perform the exercise there is a need to adjust the position of one of the handles 20, to change the distance between the handles 20. By means of the securing device according to the invention the user very easily can deactivate the securing device as shown in Fig. 2, e.g. by merely not applying any force S1 to the cord 4. In this mode the exact positioning of the handle along the cord 4 can easily be adjusted, since the housing and the sliding device can easily be slided along the cord. Once the desired position of the handle 20 is chosen/determined the user merely grippes both handles (the other handle is not shown) and applies a force F₂, which activates the cord securing device to securely keep the chosen position.

In Fig. 3 it can be seen how the securing interaction is achieved. When the person grips the handles he will exert a force F₁ in the left-hand direction (not shown) an other force F₂ in a right hand direction. One of the forces F₁ is applied by means of the cord 4 through its force supplying part 4A, where it brings about an inner-force S1 (S1 = F₁). As a result the sliding device 2 will move in a securing direction S, whereby the interacting edges 9, 14 and 10, 13 will produce a squeezing action upon the cord 4 within the device 1, 2. Thanks to the long lever arm L0 there is produced a substantial momentum which has to be counter-acted by the squeezing action between the interacting edges 9, 14 and 10, 13. Moreover the sharp corner 14 at the lower edge of the first through hole 6B will provide for a more penetrating squeezing action which also adds to the safe securing action according to the invention. The harder the person pulls in the handle 20 (the other handle being pulled with a corresponding force, or fixedly attached to a wall or floor) the greater a squeezing force between the interacting edges 9, 14 and 10,13 will be produced.

If, as in the described embodiment, a resilient cord is used the squeezing action that is provided between edges 9, 14 at the first position 11 should preferably be stronger than between the edges 10, 13 at the second position 12, in order to achieve a very safe securing action. Preferably the resilient cord will merely be bent, and not really squeezed, between the edges 10, 13 at the second position 12, which for example may be achieved by making the third through hole 6D somewhat larger than the first 6A and/or the second 6B through hole.

Hence, a cord securing device according to the invention brings about the big advantages of consisting of very few parts (merely 2 are needed), producing a quick and safe interaction and producing a securing force that adapts to the need, e.g. the more one pulls the better it secures. Without the necessity of any extra manipulation the securing force is deactivated by merely terminating, applying any force to the handle, whereafter the position of the securing device 1, 2 quickly and easily can be adjusted to any other desired position along the cord 4. It is evident that the device may be suitable for use within many other applications than a training device, e.g. skipping ropes, load securing cords/ribbons, etc. It is understood that of course two of these securing devices can be used at each side of such a training device, but normally this would not be necessary, since mostly it is sufficient that the handle on one of the sides is easily and quickly adjustable.

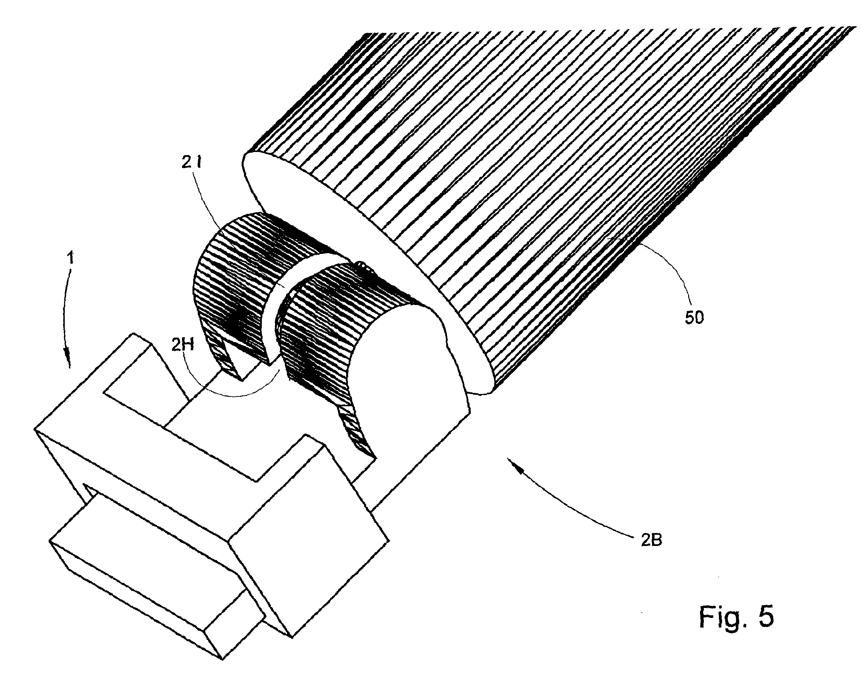

In Figs. 4, 5, and 6 there is shown a further embodiment according to the invention; the basic principles of which are the same as described in relation to Figs. 1-3. The outer part 2B of the sliding device 2 may be attached to a handle 50, arranged in a way that is very suitable for a skipping rope. As is well known, the handle must be able to rotate in relation to the skipping rope, during a normal exercise with the skipping rope. The easier to rotate the better, which is usually solved by a ball bearing. To obtain at least a similar ability as a ball bearing, the invention is arranged with some kind of a conical device 51, 52 attached at the end of the handle 50, which is intended to being positioned within a slot 2H, 2I of the outer part 2B of the sliding device 2. Preferably this is performed before the housing 1 is assembled into the sliding device 2. In that way, the handle 50 will not fall apart from the direct connection to the outer part 2B of the sliding device 2 because the housing prevents the conical device 51, 52 to come out of the slot 2H, 2I on the outer part 2B of the sliding device 2.

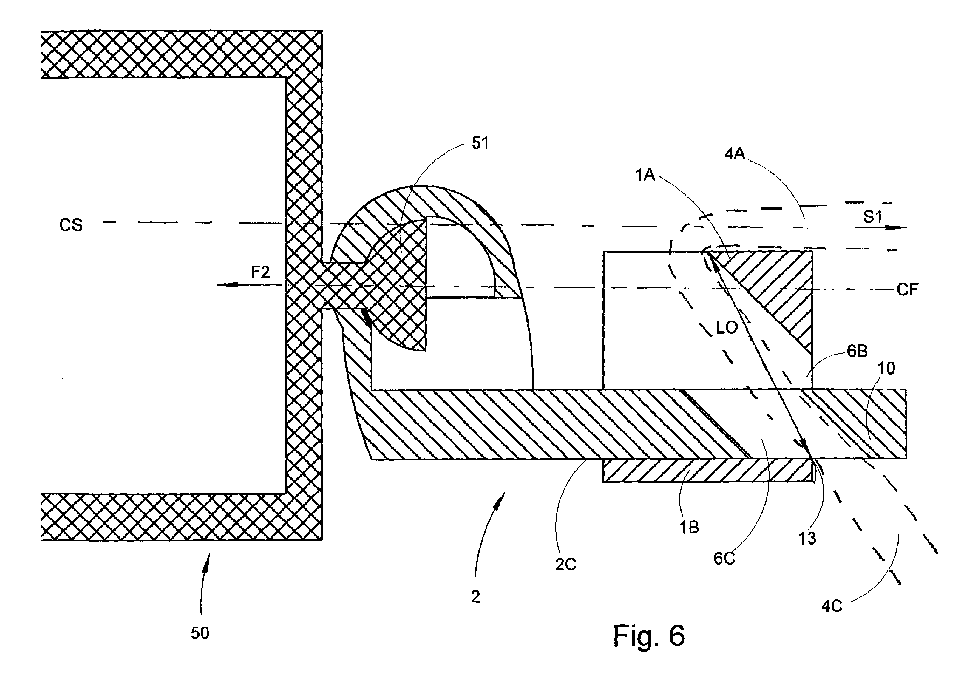

It should be understood that the handle 50 easily can be moved and rotated along the slot. In order to maintain the device in an appropriate position in relation to the handle during exercise it is preferred to (contrary to what is shown in Fig. 6) to increase the height of the outer part 2B. In other words to increase the distance between inner end of the slot 2I and the plate like base portion of the sliding device 2, such that the centre line (of the force direction) CF is positioned above the interacting edge 1A. In other words the securing force S1 should preferably act on a level below the centre line CF of the attachment point 52.

As can be seen in Figs. 4 and 6 the through hole 6B of the housing 1 can be formed like an open passage . This kind of an open hole 6B passage provides for a main benefit in that the mould for producing it in plastic will be uncomplicated and very cheap. It should be noted that this kind of hole 6B will not eliminate the possibility of using a substantial lever arm L0, according to the invention.

By this embodiment it is also shown that the securing edges can interact in different places between the sliding device 2 and the housing 1. Here one of the securing edges 13 is arranged on one side end of the wall part 1B which also forms one part of the opening 3 of the housing 1. The other interacting edge 10 is arranged on the sliding device 2 in the lower part of the hole 6C, i.e. that edge part of the hole 6C that is positioned on the opposite side in relation to the upper wall part 1A of the housing that provides the lever arm L0. The passage/hole 6B is arranged such that an angle is formed between the interacting edge at the top 1A and the edge 13 at the bottom part 1B.

Mostly it is advantageous to be able to move the handle along the skipping rope very easy. Preferably therefore, the same kind of embodiment is arranged at each end of the rope to maintain the right balance during skipping.

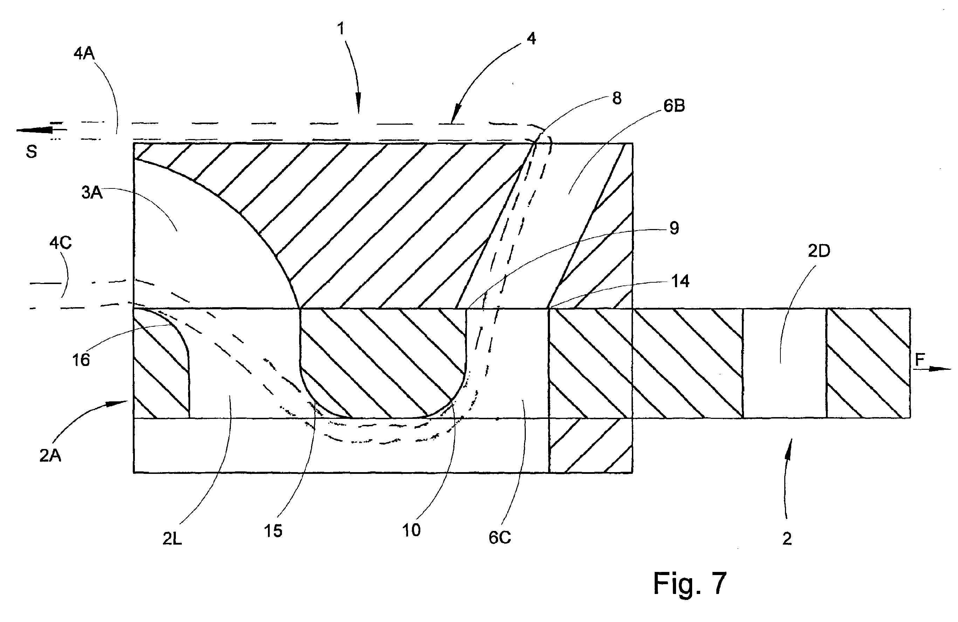

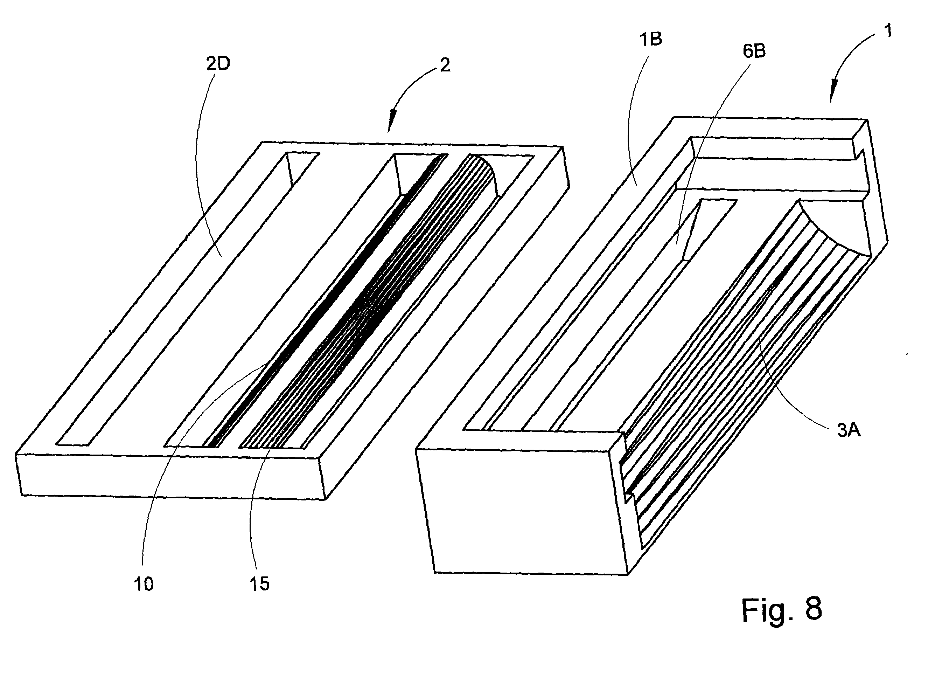

In Figs. 7 and 8 there is shown a further embodiment according to the invention. A ribbon 4 is used which has the same function as the cord according to the invention. In many cases it is beneficial if no protruding ribbon is coming out from the device, e.g. from the sandal. This embodiment is easy to use e.g. to regulate the length of a ribbon in a sandal. The ribbon can easily first be entered into hole 6B of the housing 1, then into hole 6C of the sliding device 2, then back into hole 2L of the sliding device 2 and finally into hole 3A of the housing 1. The main benefit is that when the ribbon 4C shall leave hole 3A it will be the same direction as the securing direction S and consequently no protruding ribbon will be sticking out from it. If any other embodiment of the invention had been used the ribbon 4C would be coming out in about 90 degrees direction according to the securing direction S. Preferably also a device for a skipping rope (Figs. 4, 5, and 6) would have this function to eliminate possible disturbing protruding rope ends hanging out 90 degrees from the skipping rope during skipping. For nearly total elimination of any free hanging possibly disturbing ribbon end 4C (cord end 4C, which might protrude out from the hole 3A) the ribbon end 4C could also be attached to the ribbon 4A.

To provide for a smooth and easy motion when pulling the ribbon 4C which comes out from the housing 1 in hole 3A, the edges 10, 15 and 16, belonging to the sliding device 2, may be rounded, as shown in Figs. 7 and 8. Of course also the edge 8 belonging to the housing 1 may be formed in this way (not shown). There will be a smooth and easy motion also when a force arises along the ribbon 4A which enter into the housing 1 in hole 6B, when the invention is in a deactivated mode. This kind of embodiment could also be used for e.g. to join together two cord ends to lengthen a cord for loading goods. Possibly also to create a loop and to regulate the loop, e.g. for enclosure of a bag, etc.

As shown in Fig. 8 the wall 1B is partly removed to eliminate unnecessary material and to provide the smooth an easy motion as have been described above. The interacting edges 9,14 which provide the securing of the ribbon 4 will be activated when a force F arises on a ribbon (not shown) that is attached to hole 2D of the outer part of the sliding device 2.

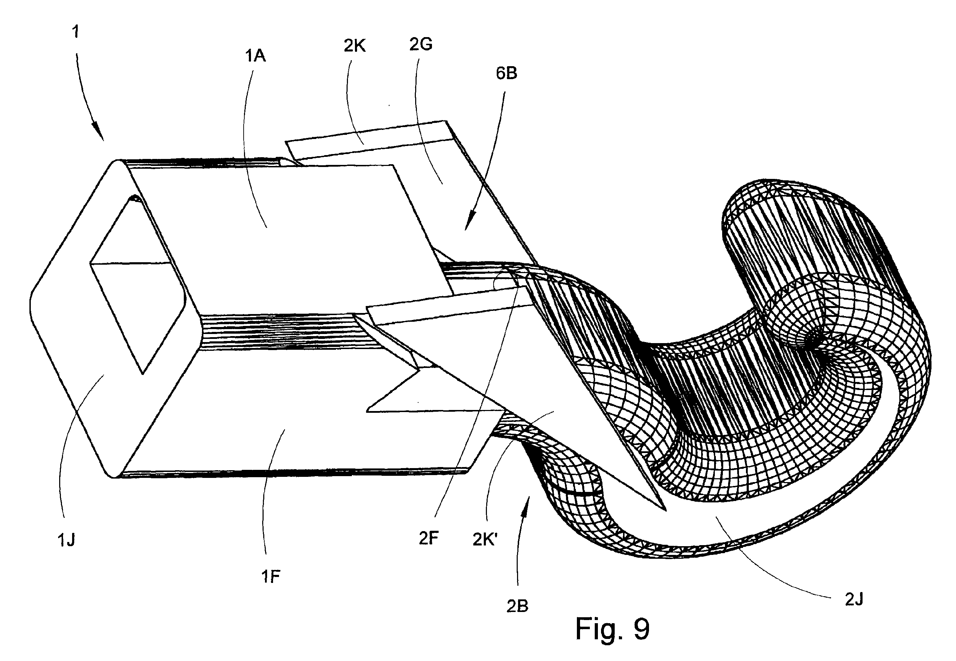

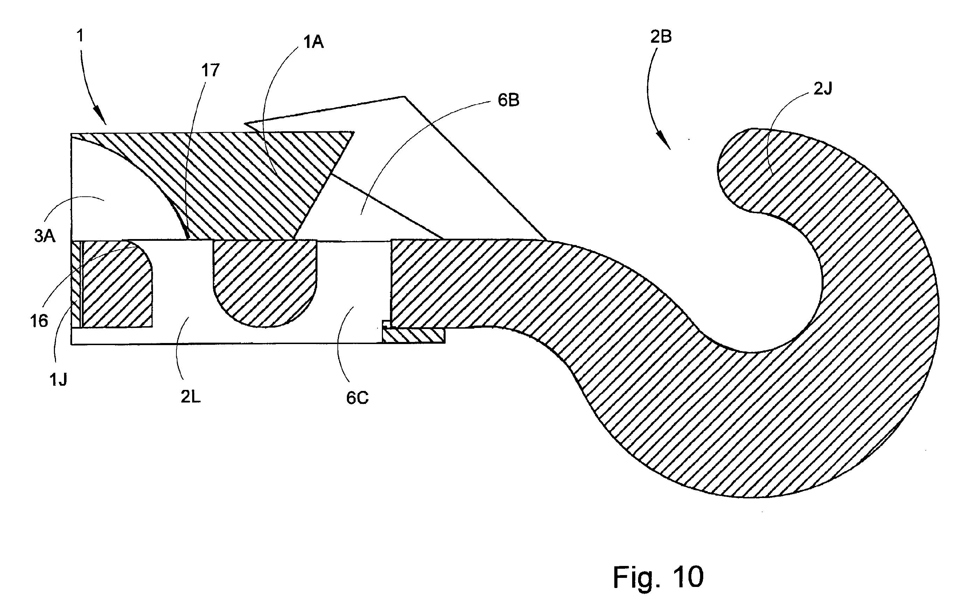

In Figs. 9 and 10 there is shown a further embodiment according to the invention. It is well known to secure goods from falling, for an example from a carrier cycle, by using elastic cords with a hook in each end of the elastic cord. If there are more or less goods on the carrier, it is a big advantage to be able to move the hooks in a relation to each other on the elastic cords to prevent the goods from falling. Basically the invention makes it possible to easily move the hooks, by using the same principle as shown in Figs. 7 and 8, i.e. the cord (not shown) is first entered into the holes 6B, 6C and then into holes 2L, 3A. An exception (besides using an elastic cord, not a ribbon) is that the securing edges 16, 17 are between the holes 2L, 3A of the sliding device 2 and the housing 1. The first hole 6B is formed between wall parts 2G, 2F of a pair of plates 2K, 2K' attached to the hook 2J and one side of a wall part 1A of the housing 1. As can be seen in Fig. 10 the opening 3 belonging to the housing 1 is delimited by a wall 1J extending between the sidewalls 1F, 1G of the housing. The securing action is created by the resilient force from the cord that pushes the upper edge of the housing 1A in a direction away from the hook 2J, that normally is attached. To un-secure the device has to be tilted, e.g. by pressing at the rear end of the housing (i.e. adjacent the wall 1J), until the cord does no longer act upon the edge 1A of the housing 1 or by merely pushing on the wall 1J. Once deactivated the device may be moved along the elastic cord 4. As a modification the walls 1F;1G, at least partly, may be eliminated.

This latter described embodiment is also very suitable for use in connection with a fender for a boat. As is well known, there is very often a need to adjust the height/ position of a fender hanging down along the side of a boat, in order to safely protect the boat from being scratched by a neighbouring boat. Most boats have some kind offence arranged along the sides. Such a fence does serve very well for hanging a fender onto it. Accordingly a hook 2J is especially suited for use in connection with such an application. Of course the hook is also very well suited for being hang on to a rope or similar device. In order to make it easier to attach and detach such a hook on to a rope, tube of a fence, or similar device, it is an advantage to have the hook made in a material which provides for some resiliency, to provide for some kind of snap-on to function. Furthermore in order to facilitate to remove/detach such a hook 2J it may be provided with a lifting device, e.g. having a hook-like shape, attached to the hook 2J. Preferably such a lifting device is provided at the back of the hook, i.e. on the opposite side of the hook compared to the opening 2B. In a preferred embodiment the lifting device is formed in such a manner that it also may be used for attaching the hook, which is easily achieved if the hook 2J is made in plastic by form casting, whereby an integrated lifting device simultaneously can be produced.

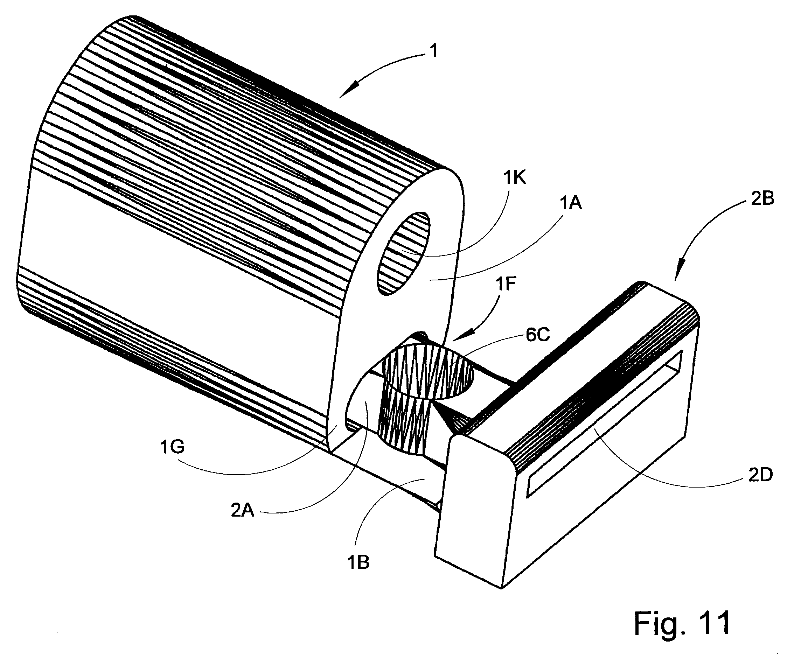

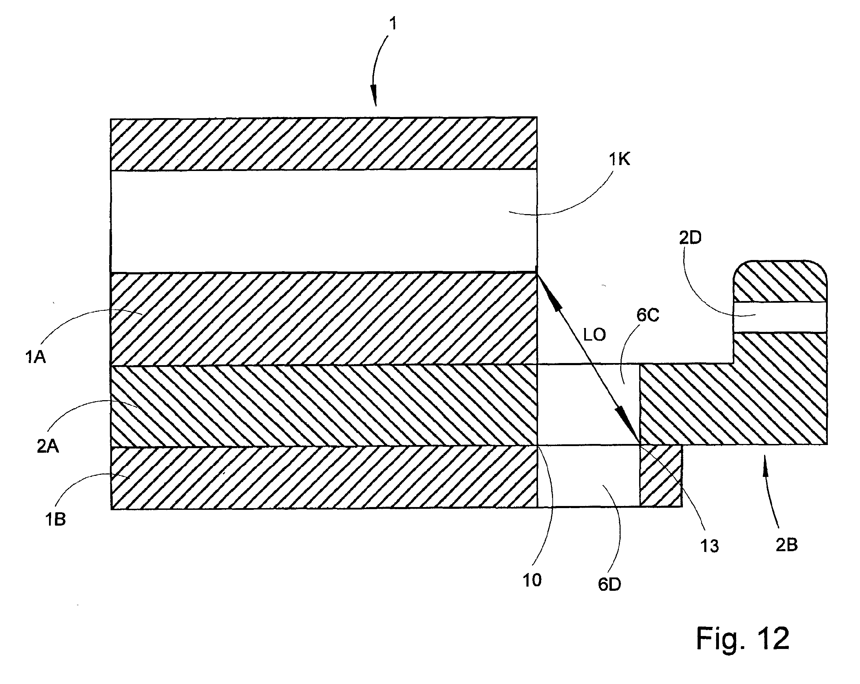

In Figs. 11 and 12 there is shown a modified embodiment according to the invention, having interacting edges 10, 13 belonging to the sliding device 2 and the housing 1 respectively. The purpose of the hole 1K belonging to the housing 1 is to keep the cord in a desired position, e.g. to maintain the lever arm L0. The hole 1K completely surrounds the cord 4A and thereby also provides protection. (Of course it may also surround partly). A surrounding hole 1K (in principle the same as hole 6B) may be especially suitable if there otherwise is a risk that the cord 4A could slide out laterally, i.e. to maintain the substantial length of the lever arm L0 in a proper position.

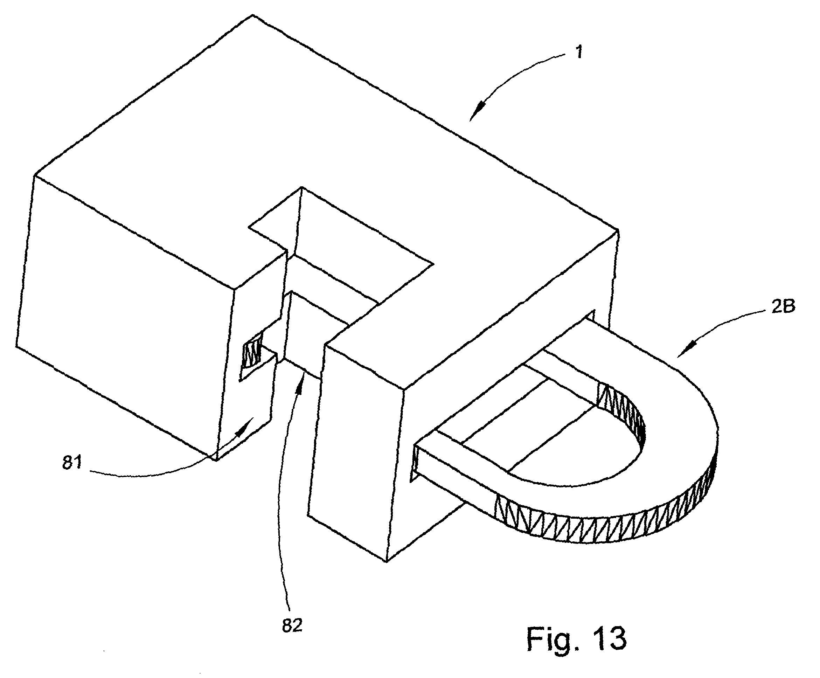

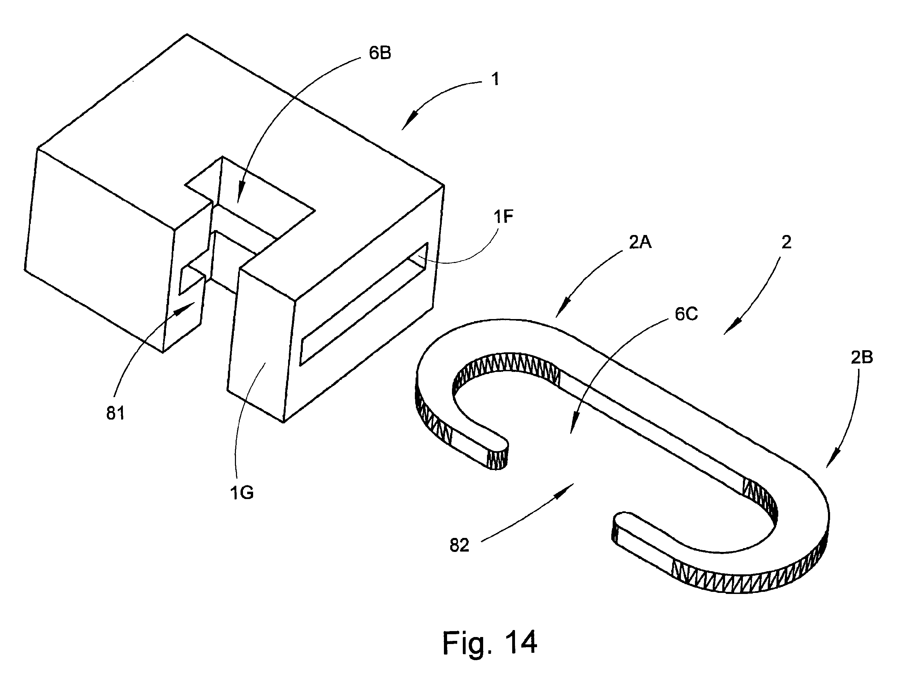

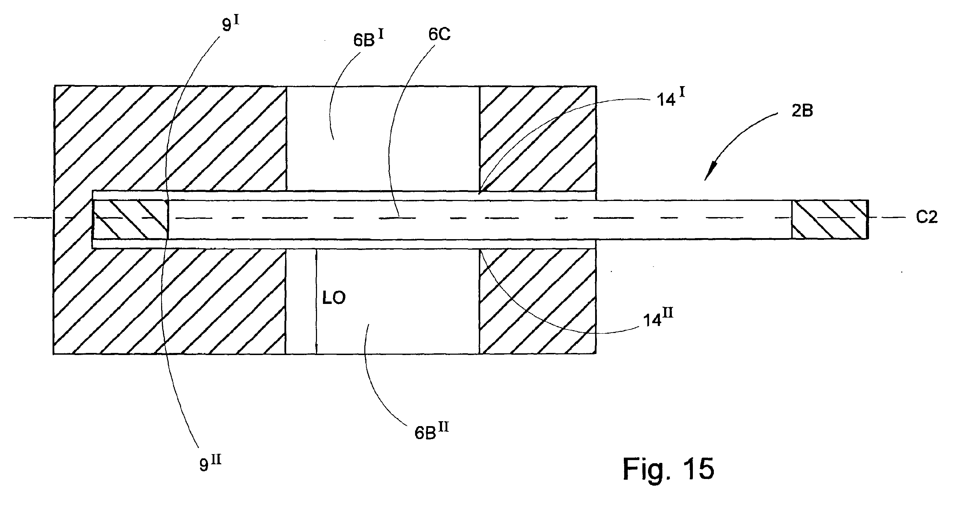

Sometimes it is an advantage to be able to apply the device of the invention directly in the middle of the cord 4 if the cord end is not reachable. This is possible, as shown in Figs. 13, 14, and 15, when the housing 1 has an opening 81 in the wall 1F; 1G. Furthermore, there must also be an opening 82 in the side of the sliding device 2. (Hence this embodiment makes it clear that the through hole 6C also may be formed like an open passage). The function is basically the same as described above, i.e. a pair of securing edges 9,14 interact to secure the cord. Furthermore, it is shown that the device is symmetrically designed, such that there are two pairs 91,141 and 911,1411 of edges respectively for interaction with a lever arm L0 in any of two perpendicular directions. In other words, the device may be inverted to the other side of the centre line C2, whereby the function on each side of the centre lineC2 will be the same. When the device is assembled as shown in Fig. 13, the openings 81, 82 are arranged so the device easily can be applied onto the middle of a cord 4. In other words, when the openings 81, 82 on the housing 1 and the sliding device 2 are brought together, an opening 81, 82 is created that makes it easy to enter the device at the middle of a cord 4.

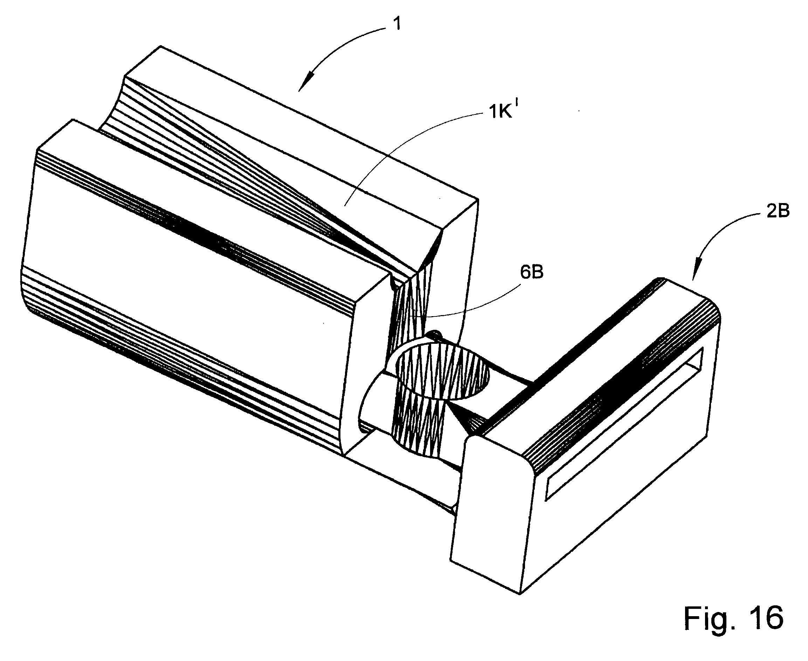

In Fig. 16 there is shown a further modified embodiment according to the invention. This embodiment is very similar to that shown in Figs. 11 and 12, with the exception that there is no hole 1K. Instead there is shown a recesses 1K' that in some application may fulfil the same function as the hole in Figs. 11 and 12.

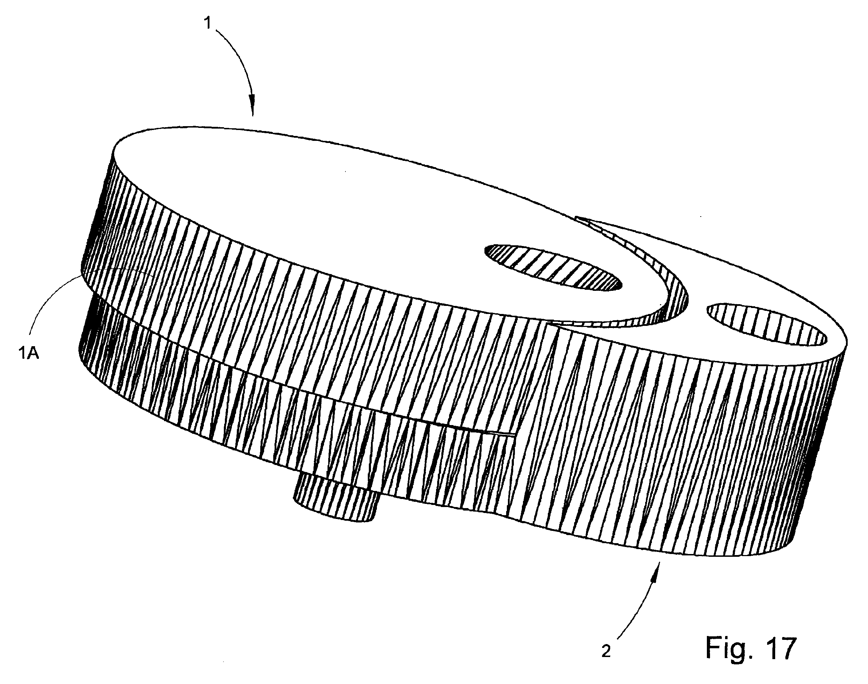

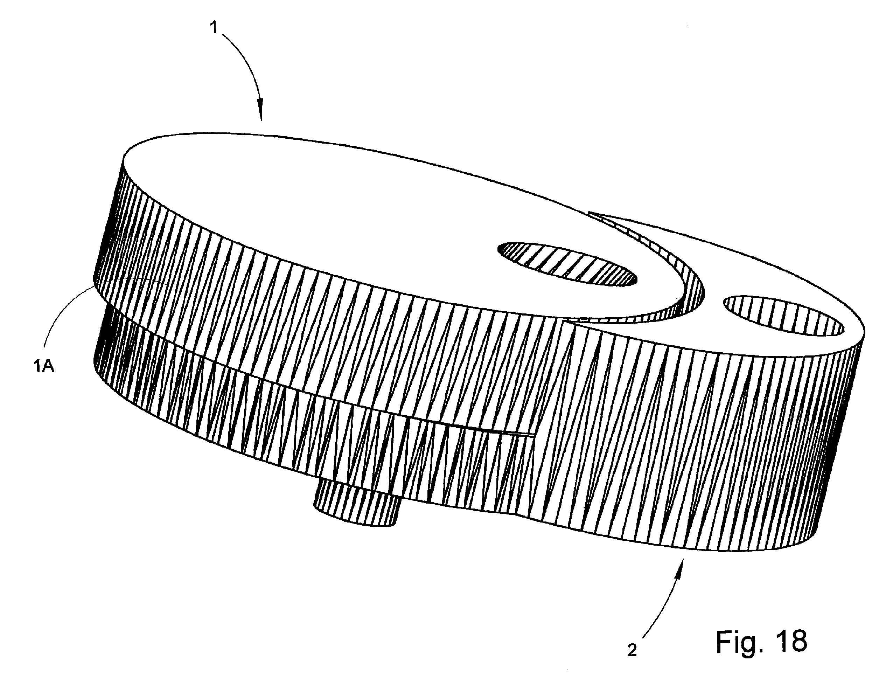

In Figs. 17 and 18 there is shown a further modified embodiment according to the invention. Here, a protruding part, a spindle 1L, is given substantially the same function as one part of the wall 1F or 1G of the housing 1. The sliding device 2 is adapted to this design by presenting a hole 2M therein 2, intended for interaction with the spindle 1L. Of course, this could be done in an opposite way such that the housing 1 contains the hole 2M and the sliding device 2 the spindle 1L (not shown) (Possibly also a separate spindle may be used, for interaction with both the sliding device 2 and the housing 1 (not shown), wherein both of them have holes formed for the spindle.) This embodiment also creates the advantage of the invention to deliver a lever arm to the wall part 1A and to keep the sliding device 2 and the housing 1 in a desired positions (thanks to the spindle) to create activation to the securing edges 9, 14 based on the lever arm L0.

It is understood that if the friction between the cord 4 and the housing 1, and/ or the cord 4 and the sliding device 2, is considerable, the lever arm L0 can be made less substantial and still create a safe securing of the cord. However, it is not possible to eliminate the lever arm L0 if it is desired to create a safe securing device according to the invention.

The skilled man realises that it is evident that different kind of optimisations of the embodiments shown above may easily be performed, e.g. for adapting the thickness and form of different areas in order to reduce the amount of material needed and/or the manufacturing time, without departing from the scope of the invention.

Also in other aspects the invention is not limited by the embodiments described above but may be varied within the scope of the claims. For instance, it is evident that the cord securing device according to the invention may be used together with any kind of flexible cord like thing, e.g. leather straps, steel wires, ribbons, cloths, etc, and that many different kind of materials may be used to produce the cord lock.

## Claims

1. A cord securing device, comprising at least one housing (1) and at least one sliding device (2), said sliding device (2) being slidingly arranged within said housing (1), at least one wall part (1A) of said housing (1) having a first through hole (6B), said sliding device (2) having a second through hole (6C), said first and second through holes (6B, 6C) forming a passage (6) for a cord (4), said first and second through holes (6B, 6C) providing a first and a second securing edge (9, 14) which interact for securing said cord (4) within said cord securing device, **characterized in that** one of said through holes is arranged so as to provide a lever arm (L0) of substantial length (L1), in order to produce an adaptive interaction for securing of said cord (4) which is related to the force (S1) that is applied to a first outer part (4A) of said cord (4).

2. A cord securing device according to claim 1, **characterised in that** at least one of said through holes (6B, 6C) is arranged with a sideways open passage (81;82).

3. A cord securing device according to claim 2, **characterised in that** both of said through holes (6B, 6C) are provided with an open passage respectively (81;82).

4. A cord securing device according to claim 1, **characterised in that** at least a part of said sliding device (2) is arranged such that it protrudes through an opening in the housing that at least partly forms said through hole (6B) and that also comprises said securing edge (13).

5. A cord securing device according to claim 1, **characterised in that** there is arranged at least on further through hole (2L) for positioning another end (4C) of said cord in a direction that substantially differs from the extension of any of the other through holes (6B, 6C).

6. A cord securing device according to any of claims 2-5, **characterized in that** said lever arm (L0) of said first through hole (6B) is greater than the depth (L2) of said second through hole (6C), wherein preferably L1 is 1.2-50 times greater than L2, and more preferred L1 is at least 2 times greater than L2.

7. A cord securing device according to any of claims 2-6, **characterized in that** a centre line (C1) of the first through hole (6B) providing said lever arm (L0) extends in a transverse direction in relation to a plane (P1) which contains a sliding surface (1C) of the housing (1), which interacts with a sliding surface (2C) of said securing part (2A), and that the normal (N1) of said plane (P1) and said centre line (C1) forms an angle (α) which is 0 - 80°, preferably 10 - 60°, more preferred 20 - 50°.

8. A cord securing device according to any of claims 2-7, **characterized in that** said sliding device is slidably arranged within said housing (1) in such a manner that it may substantially, merely be moved into two opposite directions, i.e. one releasing direction (R) and one securing direction (S).

9. A cord securing device according to any of claims 2-8, **characterized in that** said sliding device (2) comprises a force applying part (2B) which extends outside of said housing (1) and which preferably is directly or indirectly (2D) interconnected with a gripable portion (20).

10. A cord securing device according to any of claims 2-9, **characterized in that** said no resilient member is used to urge the sliding device (2).

11. Method for securing a cord, comprising the steps of:
- providing a housing having at least one through hole,
- providing a sliding device having at least one through hole,
- providing at least one sliding surface on the housing and/or the sliding device, for sliding movement between said housing and said sliding device,
- providing at least one wall for controlling the sliding movement between said housing and said sliding device,
- providing a first securing edge connected to said housing,
- providing a second securing edge connected to said sliding device,
- providing a force applying part connected to said sliding device or said housing,
- providing a lever arm of substantial length connected to said housing or said sliding device, to produce an adaptive interaction for securing a cord (4) positioned between said edges,
- positioning a cord within and passing through said through holes, such that at least on cord end comes out of one of said through holes,
- applying a force to at least one of said cord end or force applying part, whereby said lever arm of substantial length produces an adaptive interactive force on said cord between said securing edges, such that the cord is secured between said edges.
